# EUROPÄISCHE PATENTSCHRIFT

(11) **EP 3 540 334 B1**
(45) Veröffentlichungstag und Bekanntmachung des Hinweises auf die Patenterteilung: **20.10.2021**
(21) Anmeldenummer: 18161941.2
(22) Anmeldetag: 15.03.2018
(51) Int. Cl.: F25B 1/10, F25B 15/00, F25B 15/04, F25B 25/02

(54) **WÄRMETRANSFORMATOR UND WÄRMETRANSFORMATIONSPROZESS**
HEAT TRANSFORMER AND HEAT TRANSFORMATION PROCESS
TRANSFORMATEUR À CHALEUR ET PROCESSUS DE TRANSFORMATION DE CHALEUR

(43) Veröffentlichungstag der Anmeldung: 18.09.2019
(73) Patentinhaber: AGO GmbH Energie + Anlagen, 95326 Kulmbach (DE)
(72) Erfinder: Ramming, Klaus, 95336 Mainleus (DE)
(74) Vertreter: Bauer, Dirk

(56) Entgegenhaltungen:
- EP-A1- 3 236 178
- WO-A1-2010/063074
- CN-A- 101 476 798
- DD-A1- 236 979
- JP-A- H06 323 678

## Beschreibung

Die Erfindung betrifft zunächst einen Wärmetransformator mit gasförmigem Kältemittel und flüssigem Lösungsmittel, einer armen und einer reichen Lösung, wobei die arme und die reiche Lösung einphasige Mischungen des Lösungsmittels und des Kältemittels sind, sowie mit einem Absorber, in dem die arme Lösung das Kältemittel absorbiert und dabei Wärme abgibt, einem Drosselelement, das die reiche Lösung nach Austritt aus dem Absorber entspannt, einem Austreiber, in dem die reiche Lösung nach Austritt aus dem Drosselelement einen ersten von außen zugeführten Wärmestrom aufnimmt und dabei das Kältemittel austreibt, einem Verflüssiger, der das Kältemittel nach Austritt aus dem Austreiber verflüssigt, und einer Kältemittelpumpe, die das flüssige Kältemittel nach Austritt aus dem Verflüssiger in einen Verdampfer pumpt, in dem es vor Eintritt in den Absorber einen zweiten von außen zugeführten Wärmestrom aufnimmt und verdampft, und einer Lösungsmittelpumpe, die die arme Lösung nach Austritt aus dem Austreiber in den Absorber pumpt. Die Erfindung betrifft weiterhin einen Wärmetransformationsprozess mit einem gasförmigen Kältemittel und einem flüssigen Lösungsmittel, einer armen und einer reichen Lösung, wobei die arme und die reiche Lösung einphasige Mischungen des Lösungsmittels und des Kältemittels sind, und wobei die arme Lösung das Kältemittel absorbiert und dabei Wärme abgibt, dann die reiche Lösung erst entspannt wird, anschließend einen ersten dem Wärmetransformationsprozess von außen zugeführten Wärmestrom aufnimmt und dabei das Kältemittel austreibt, dann das Kältemittel von der reichen Lösung abgeschieden, verflüssigt, gepumpt und unter Aufnahme eines zweiten von außen zugeführten Wärmestroms verdampft, und die arme Lösung gepumpt wird.

Wärmetransformatoren und -transformationsprozesse der vorgenannten Art sind allgemein bekannt: Sie zeichnen sich durch vier Hauptwärmeübertrager - Absorber und Verdampfer auf Hochdruck-, und Austreiber und Verflüssiger auf Niederdruckniveau - sowie je eine Kältemittel- und eine Lösungsmittelpumpe und ein Drosselelement für die reiche Lösung zwischen den Druckniveaus aus. Dem Austreiber und dem Verdampfer wird Wärme auf einem mittleren Temperaturniveau von Außen zugeführt, der Absorber gibt Nutzwärme auf einem höheren und der Verflüssiger Abwärme auf einem niedrigeren Temperaturniveau ab. Wärmetransformatoren werden daher auch als "Wärmestromspalter" bezeichnet. Die JP-A-H06 323678 offenbart zum Beispiel einen solchen Wärmetransformator bzw. einen solchen Wärmetransformationsprozess.

In den bekannten Wärmetransformatoren ist das Temperaturniveau der im Austreiber zugeführten Wärme durch die nach dem Absorber in der reichen Lösung verbleibende Wärmemenge beschränkt.

### Aufgabe

Der Erfindung liegt die Aufgabe zugrunde, das minimale Temperaturniveau der dem Austreiber zugeführten Wärme zu senken.

### Lösung

Ausgehend von den bekannten Wärmetransformatoren wird nach der Erfindung vorgeschlagen, einen zweiten Austreiber vorzusehen, in dem ein vor dem Austreiber abgezweigter Teilstrom der reichen Lösung parallel zu dem Austreiber Wärme aus der reichen Lösung zwischen Absorber und Drosselelement aufnimmt. Die intern anfallende Wärme wird zur Erhöhung der Temperatur der reichen Lösung genutzt. Die reiche Lösung wird so abgekühlt und kann in dem Austreiber Wärme auf einem niedrigeren Temperaturniveau aufnehmen.

Vorzugsweise weist ein erfindungsgemäßer Wärmetransformator einen Lösungswärmeübertrager auf, in dem die arme Lösung vor Eintritt in den Absorber Wärme aus der reichen Lösung zwischen Absorber und Drosselelement aufnimmt. Die reiche Lösung wird so weiter abgekühlt und kann in dem Austreiber Wärme auf einem noch niedrigeren Temperaturniveau aufnehmen. Zugleich wird das Temperaturniveau der der Nutzwärme in dem Absorber erhöht.

Vorzugsweise weist ein erfindungsgemäßer Wärmetransformator eine Rektifikationskolonne auf, in der das Kältemittel aus dem Austreiber aus der reichen Lösung zwischen Drosselelement und Austreiber zweites Kältemittel austreibt. So wird das im Austreiber zu erwärmende Volumen und damit der Bedarf an von außen zugeführter Wärme weiter vermindert und die energetische Effizienz gesteigert.

Vorzugsweise weist ein erfindungsgemäßer Wärmetransformator einen Kältewärmeübertrager auf, in dem das Kältemittel vor Eintritt in den Verflüssiger aus dem flüssigen Kältemittel vor Eintritt in den Verdampfer Wärme aufnimmt. So wird zugleich das Temperaturniveau der Abwärme und der an die Umgebung abgegebene Wärmestrom vermindert und das Temperaturniveau der Nutzwärme erhöht. Außerdem kondensiert im Kältewärmeübertrager vor Eintritt in den Verflüssiger Lösungsmittel aus, was gleichfalls eine Steigerung der Nutzwärme und der energetischen Effizienz sowie eine Verbesserung der Kondensations- und Verdampfungseigenschaften bewirkt.

Vorzugsweise weist ein solcher Wärmetransformator einen Flüssigkeitsabscheider auf, in dem das aus dem Kältemittel nach Austritt aus dem Kältewärmeübertrager kondensierte Lösungsmittel abgetrennt und der reichen Lösung vor Eintritt in den Austreiber zugeführt wird.

Vorzugsweise weist ein solcher Wärmetransformator eine Kondensatpumpe auf, die das flüssige Lösungsmittel aus dem Flüssigkeitsabscheider in die reiche Lösung vor Eintritt in den Austreiber pumpt. Die Kondensatpumpe fördert das flüssige Kältemittel ohne nennenswerte Druckerhöhung zielgerichtet zum Austreiber. Alternativ kann der Flüssigkeitsabscheider oberhalb des Austreibers angeordnet sein. Durch die Verdampfung im Austreiber stellt sich dann ein Naturumlauf ein.

Vorzugsweise weist ein erfindungsgemäßer Wärmetransformator einen parallel zu dem Absorber angeordneten zweiten Absorber auf, in dem ein Teilstrom der armen Lösung vor Eintritt in den Absorber einen Teilstrom des Kältemittels vor Eintritt in den Absorber absorbiert und dabei an die arme Lösung vor Eintritt in den Absorber Wärme abgibt. Durch die Temperaturerhöhung der armen Lösung steigt das Temperaturniveau der Nutzwärme.

Vorzugsweise weist ein erfindungsgemäßer Wärmetransformator einen dritten Absorber auf, in dem die reiche Lösung vor dem Drosselelement einen Teilstrom des Kältemittels absorbiert und dabei Wärme an einen Teilstrom der armen Lösung nach Austritt aus dem Austreiber abgibt. Durch die Temperaturerhöhung der armen Lösung steigt das Temperaturniveau der Nutzwärme.

Vorzugsweise ist in einem erfindungsgemäßen Wärmetransformator das Lösungsmittel Wasser und das Kältemittel Ammoniak. Wasser und Ammoniak sind natürliche Stoffe und haben sich in der Kältetechnik bewährt.

Ausgehend von dem bekannten Wärmetransformationsprozess wird nach der Erfindung vorgeschlagen, dass vor Zufuhr des ersten Wärmestroms ein Teilstrom der reichen Lösung abgezweigt wird und parallel zu dem ersten Wärmestrom aus der reichen Lösung zwischen dem Absorbieren des Kältemittels und dem Entspannen Wärme aufnimmt. Das erfindungsgemäße Verfahren wird mit einem der vorstehend beschriebenen Wärmetransformatoren ausgeführt und zeichnet sich gleichermaßen durch die dort aufgeführten Vorteile aus.

### Ausführungsbeispiele

Die Erfindung wird nachfolgend anhand von Ausführungsbeispielen erläutert. Es zeigen in Prinzipskizzen
- Fig. 1: einen ersten erfindungsgemäßen Wärmetransformator,
- Fig. 2: einen zweiten erfindungsgemäßen Wärmetransformator,
- Fig. 3: einen dritten erfindungsgemäßen Wärmetransformator,
- Fig. 4: einen vierten erfindungsgemäßen Wärmetransformator,
- Fig. 5: einen fünften erfindungsgemäßen Wärmetransformator und
- Fig. 6: einen sechsten erfindungsgemäßen Wärmetransformator.

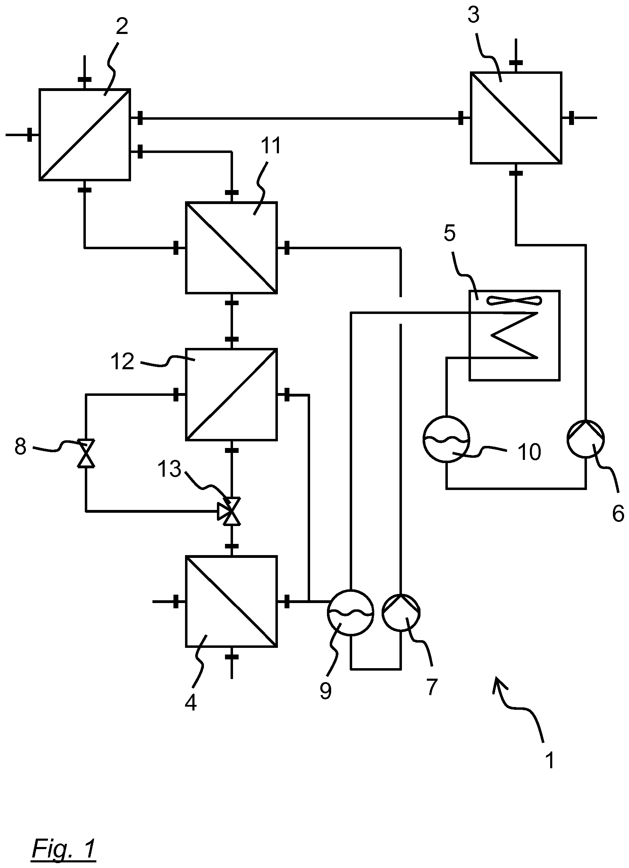

Das in Figur 1 gezeigte erste erfindungsgemäße Wärmetransformator 1 weist einen Absorber 2, einen Verdampfer 3, einen Austreiber 4, einen Verflüssiger 5, eine Kältemittelpumpe 6, eine Lösungsmittelpumpe 7 und ein Drosselelement 8 auf.

Der erfindungsgemäße Wärmetransformator 1 eignet sich zur Ausführung eines erfindungsgemäßen Wärmetransformationsprozesses, in dem eine reiche Lösung - mit Ammoniak als Kältemittel hoch angereichertes Wasser als Lösungsmittel - auf einem Niederdruckniveau in dem Austreiber 4 durch einen von außen zugeführten Wärmestrom aufgeheizt und in einem anschließenden Abscheider 9 gasförmiges Kältemittel austreibt.

Das Kältemittel gibt in dem Verflüssiger 5 Wärme an die Umgebung ab, wird in einem weiteren anschließenden Abscheider 10 verflüssigt und mittels der Kältemittelpumpe 6 auf ein Hochdruckniveau in den Verdampfer 3 gepumpt. In dem Verdampfer 3 nimmt das Kältemittel aus einem zweiten von außen zugeführten Wärmestrom Verdampfungswärme auf und strömt gasförmig in den Absorber 2.

Die in dem ersten Abscheider 9 verbliebene arme Lösung wird mittels der Lösungsmittelpumpe 7 gleichfalls auf das Hochdruckniveau in den Absorber 2 gepumpt. In dem Absorber 2 absorbiert die arme Lösung das gasförmige Kältemittel und gibt dabei einen Nutzwärmestrom ab. Die reiche Lösung wird im Drosselelement 8 wieder auf das Niederdruckniveau entspannt und in den Austreiber 4 geführt und schließt den Kreisprozess.

Um das Temperaturniveau der Nutzwärme zu erhöhen, wird die in der aus dem Absorber 2 ausströmenden reichen Lösung verbleibende Wärme genutzt, um die in den Absorber 2 geführte arme Lösung in einem Lösungswärmeübertrager aufzuheizen.

Bevor die reiche Lösung in dem Drosselelement 8 entspannt wird, gibt sie in einem zweiten Austreiber 12 Wärme an einen Teilstrom der reichen Lösung ab, der in einem Verteilerventil 13 vor dem Austreiber 4 abgezweigt wird.

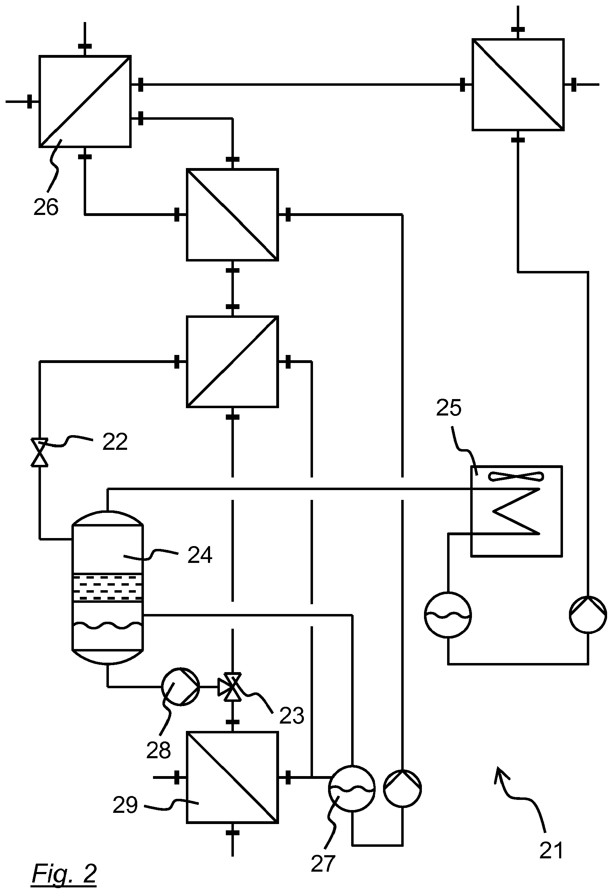

Der in Figur 2 dargestellte zweite erfindungsgemäße Wärmetransformator 21 entspricht zunächst im Wesentlichen dem ersten Wärmetransformator 1.

Zusätzlich weist der zweite Wärmetransformator 21 zwischen dem Drosselelement 22 und dem Verteilerventil 23 eine Rektifikationskolonne 24 auf, in der die reiche Lösung ohne Zufuhr von Wärme von außen weiteres gasförmiges Kältemittel abscheidet, das über den Verflüssiger 25 in den Absorber 26 geführt wird. Das gasförmige Kältemittel aus dem Abscheider 27 wird gleichfalls durch die Rektifikationskolonne 24 und so mit dem weiteren Kältemittel zusammengeführt. Aus der Rektifikationskolonne 24 wird anstelle der reichen eine verarmte Lösung mit einer weiteren Lösungspumpe 28 in den Austreiber 29 abgezogen, die den Flüssigkeitspegel in der Rektifikationskolonne 24 regelt.

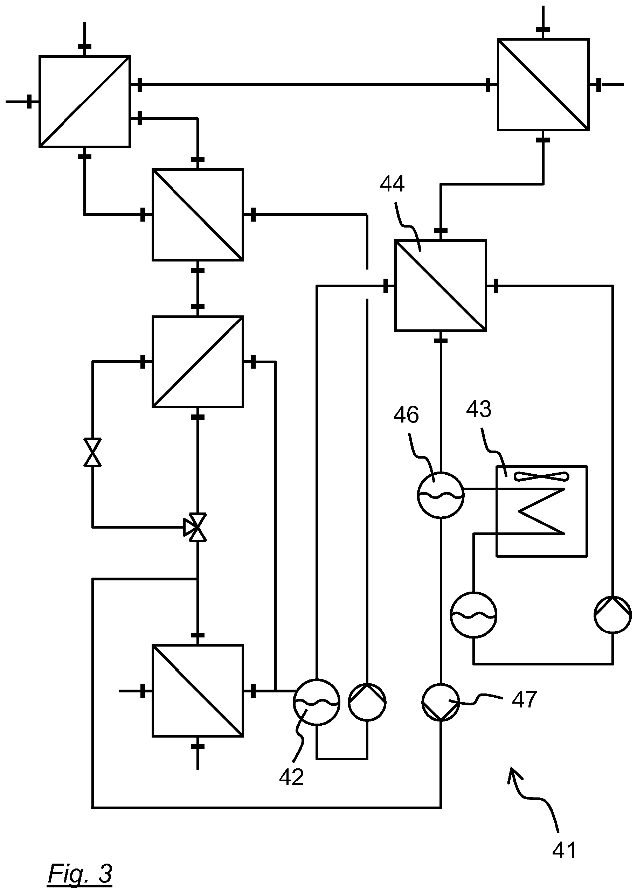

Der in Figur 3 dargestellte dritte erfindungsgemäße Wärmetransformator 41 entspricht wieder zunächst im Wesentlichen dem ersten Wärmetransformator 1. Zusätzlich weist der dritte Wärmetransformator 41 zwischen dem ersten Abscheider 42 und dem Verflüssiger 43 einen Kältewärmeübertrager 44 auf, in dem das gasförmige Kältemittel aus dem flüssigen Kältemittel vor dessen Eintritt in den Verdampfer 45 Wärme aufnimmt. Das gasförmige Kältemittel treibt so in einem nachfolgenden Abscheider 46 vor Eintritt in den Verflüssiger 43 noch einmal Lösungsmittel aus, das mittels einer Kondensatpumpe 47 abgezogen und mit der reichen Lösung in den Austreiber 48 eingespeist wird.

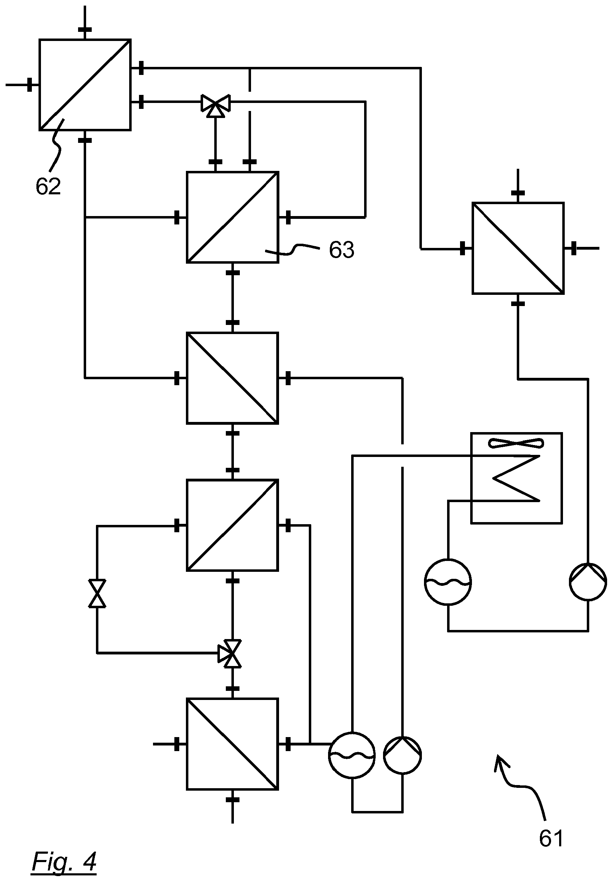

Auch der in Figur 4 dargestellte vierte erfindungsgemäße Wärmetransformator 61 entspricht zunächst im Wesentlichen dem ersten Wärmetransformator 1. Zusätzlich weist der vierte Wärmetransformator 61 einen dem Absorber 62 parallel geschalteten zweiten Absorber 63 auf. Die Ströme der armen Lösung und des gasförmigen Kältemittels werden auf den ersten und den zweiten Absorber 63 aufgeteilt, die Absorptionswärme wird der armen Lösung vor Eintritt in den Absorber 62 zugeführt.

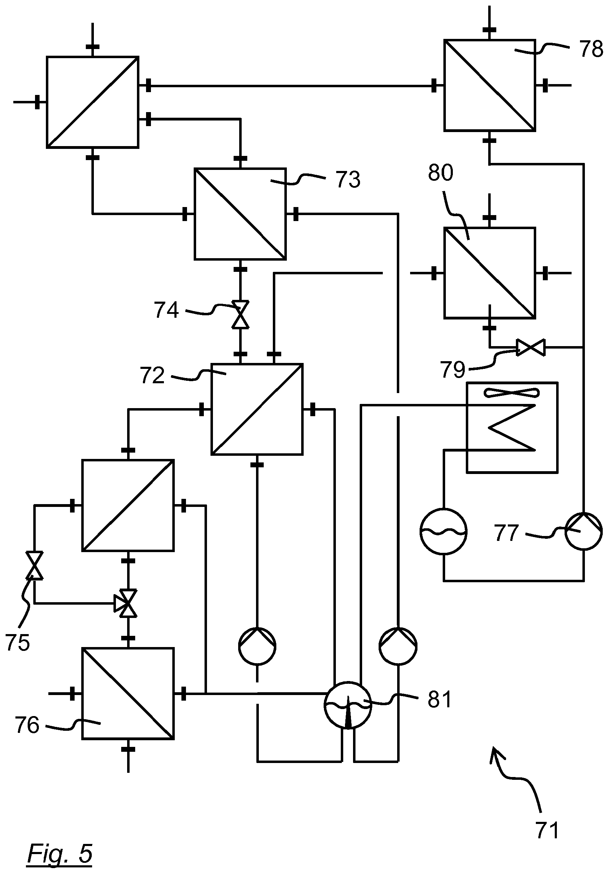

Der in Figur 5 dargestellte fünfte erfindungsgemäße Wärmetransformator 71 entspricht ebenfalls im Wesentlichen dem ersten Wärmetransformator 1. Zusätzlich weist der fünfte Wärmetransformator 71 einen dritten Absorber 72 auf einem Zwischendruckniveau zwischen dem Hochdruck- und dem Niederdruckniveau auf. Nach Austritt aus dem Lösungswärmeübertrager 73 wird die reiche Lösung mit einem zweiten Drosselelement 74 zunächst auf das Zwischendruckniveau entspannt, absorbiert in dem dritten Absorber 72 einen Teilstrom des Kältemittels und wird über das Drosselelement 75 erst dann in den Austreiber 76 geführt. Der Teilstrom wird hierzu aus dem Kältemittel zwischen der Kältemittelpumpe 77 und dem Verdampfer 78 über ein weiteres

Drosselelement 79 ausgekoppelt und in einem zweiten Verdampfer 80 unter Zufuhr eines weiteren von außen zugeführten Wärmestroms verdampft, die Absorptionswärme wird einem Teilstrom der hinter dem Austreiber 76 verbleibenden armen Lösung zugeführt, der anschließend in den Abscheider 81 zurück zirkuliert.

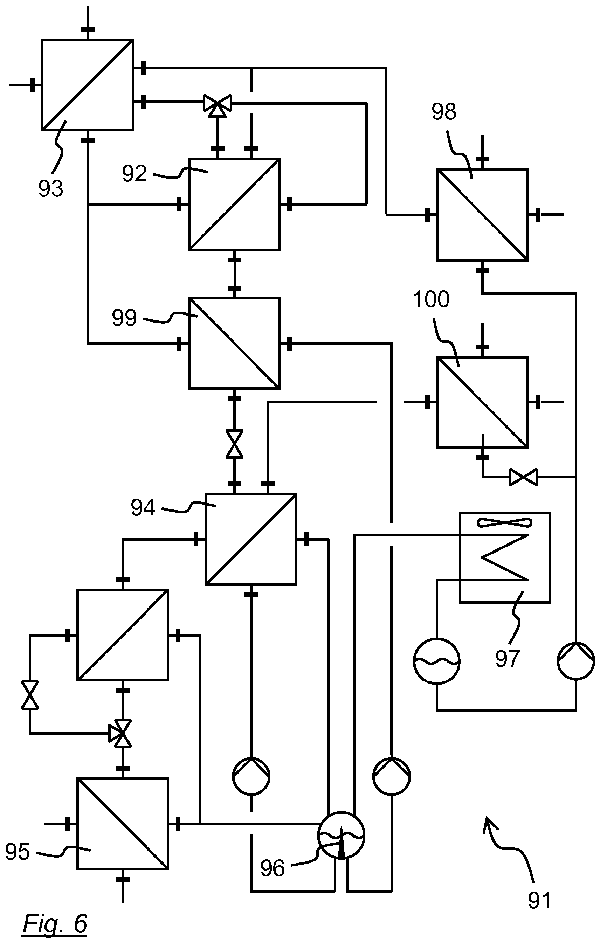

Der in Figur 6 dargestellte sechste erfindungsgemäße Wärmetransformator 91 weist die zusätzlichen Elemente des vierten Wärmetransformators 61 und des fünften Wärmetransformators 71 - nämlich den zweiten Absorber 92 parallel zum ersten Absorber 93 und den dritten Absorber 94 in einem Zwischendruckniveau sowie die jeweiligen ergänzenden Aggregate - auf, entspricht darüber hinaus aber wieder im Wesentlichem dem ersten Wärmetransformator 1:
Das Hochdruckniveau des sechsten Wärmetransformators liegt bei 19,3 *bar,* das Zwischendruckniveau bei 13,5 *bar.* In dem sechsten Wärmetransformator 91 wird dem Austreiber 95 75 % der reichen Lösung und von außen ein Heizmittel auf 58 *°C* zugeführt. Im Austreiber 95 wird die reiche Lösung auf 54 °*C* aufgeheizt und das Heizmittel auf 42 °*C* abgekühlt. Aus dem anschließenden Abscheider 96 wird die arme Lösung mit zwei Strömen bei 53 °*C* bzw. 58 °*C* abgezogen.

Das Kältemittel aus dem Abscheider 96 wird in dem Verflüssiger 97 auf 18 *°C* abgekühlt. Auch dem Verdampfer 98 wird das Heizmittel auf 58 °*C* zugeführt. Dort gibt es Wärme an das Kältemittel auf dem Hochdruckniveau ab und kühlt dabei auf 42 °*C* ab. Das Kältemittel verlässt den Verdampfer 98 mit 48 °*C*.

In dem Absorber 93 absorbiert die arme Lösung das Kältemittel, heizt dabei einen Nutzwasserstrom von 70 °*C* auf 80 °*C* auf und verlässt den Absorber als reiche Lösung mit 72 °*C*. Im Lösungswärmeübertrager 99 kühlt die reiche Lösung auf 63 °*C* ab und heizt dabei die arme Lösung auf 70 °*C* auf.

Im dritten Absorber 94 kühlt die reiche Lösung weiter auf 57 °*C* ab und heizt die aus dem Abscheider 96 umlaufende arme Lösung von 53 °*C* auf 58 °*C* auf. Hierzu absorbiert die reiche Lösung Kältemittel bei 39 °*C*. In dem zweiten Verdampfer 100 im Zwischendruckniveau nimmt das Kältemittel Wärme aus einem dritten Heizmittelstrom auf, der dabei von 42 °*C* auf 41 °*C* abkühlt.

In dem zweiten Austreiber 101 kühlt die reiche Lösung auf dem Zwischendruckniveau weiter auf 42 °*C* ab und heizt den auf dem Niederdruckniveau vor dem Austreiber 95 abgezweigten Teilstrom im Umfang von 25 % der reichen Lösung auf 52 °*C* auf.

In den Figuren sind
- 1: Wärmetransformator
- 2: Absorber
- 3: Verdampfer
- 4: Austreiber
- 5: Verflüssiger
- 6: Kältemittelpumpe
- 7: Lösungsmittelpumpe
- 8: Drosselelement
- 9: Abscheider
- 10: Abscheider
- 11: Lösungsmittelwärmeübertrager
- 12: zweiter Austreiber
- 13: Verteilerventil
- 21: Wärmetransformator
- 22: Drosselelement
- 23: Verteilerventil
- 24: Rektifikationskolonne
- 25: Verflüssiger
- 26: Absorber
- 27: Abscheider
- 28: Lösungspumpe
- 29: Austreiber
- 41: Wärmetransformator
- 42: Abscheider
- 43: Verflüssiger
- 44: Kältewärmeübertrager
- 45: Verdampfer
- 46: Abscheider
- 47: Kondensatpumpe
- 48: Austreiber
- 61: Wärmetransformator
- 62: Absorber
- 63: zweiter Absorber
- 71: Wärmetransformator
- 72: dritter Absorber
- 73: Lösungswärmeübertrager
- 74: zweites Drosselelement
- 75: Drosselelement
- 76: Austreiber
- 77: Kältemittelpumpe
- 78: Verdampfer
- 79: weiteres Drosselelement
- 80: zweiter Verdampfer
- 81: Abscheider
- 91: Wärmetransformator
- 92: zweiter Absorber
- 93: Absorber
- 94: dritter Absorber
- 95: Austreiber
- 96: Abscheider
- 97: Verflüssiger
- 98: Verdampfer
- 99: Lösungswärmeübertrager
- 100: zweiter Verdampfer
- 101: zweiter Austreiber

## Patentansprüche

1. Wärmetransformator (1, 21, 41, 61, 71, 91) mit gasförmigem Kältemittel und flüssigem Lösungsmittel, einer armen und einer reichen Lösung, wobei die arme und die reiche Lösung einphasige Mischungen des Lösungsmittels und des Kältemittels sind, sowie mit einem Absorber (2, 26, 62, 93), in dem die arme Lösung das Kältemittel absorbiert und dabei Wärme abgibt, einem Drosselelement (8, 22, 75), das die reiche Lösung nach Austritt aus dem Absorber (2, 26, 62, 93) entspannt, einem ersten Austreiber (4, 29, 48, 76, 95), in dem die reiche Lösung nach Austritt aus dem Drosselelement (8, 22, 75) einen ersten von außen zugeführten Wärmestrom aufnimmt und in einem Abscheider (9, 27, 42, 81, 96) das Kältemittel austreibt, einem Verflüssiger (5, 25, 43, 97), der das Kältemittel nach Austritt aus dem ersten Austreiber (4, 29, 48, 76, 95) verflüssigt, und einer Kältemittelpumpe (6, 77), die das flüssige Kältemittel nach Austritt aus dem Verflüssiger (5, 25, 43, 97) in einen Verdampfer (3, 45, 78, 98) pumpt, in dem es vor Eintritt in den Absorber (2, 26, 62, 93) einen zweiten von außen zugeführten Wärmestrom aufnimmt und verdampft, und einer Lösungsmittelpumpe (7), die die arme Lösung nach Austritt aus dem ersten Austreiber (4, 29, 48, 76, 95) in den Absorber (2, 26, 62, 93) pumpt, ***gekennzeichnet durch*** einen zweiten Austreiber (12, 101), in dem ein vor dem esrten Austreiber (4, 29, 48, 76, 95) abgezweigter Teilstrom der reichen Lösung parallel zu dem ersten Austreiber (4, 29, 48, 76, 95) Wärme aus der reichen Lösung zwischen Absorber (2, 26, 62, 93) und Drosselelement (8, 22, 75) aufnimmt.

2. Wärmetransformator (1, 21, 41, 61, 71, 91) nach dem vorgenannten Anspruch, ***gekennzeichnet durch*** einen Lösungswärmeübertrager (11, 73, 99), in dem die arme Lösung vor Eintritt in den Absorber (2, 26, 62, 93) Wärme aus der reichen Lösung zwischen Absorber (2, 26, 62, 93) und Drosselelement (8, 22, 75) aufnimmt.

3. Wärmetransformator (21) nach einem der vorgenannten Ansprüche, ***gekennzeichnet durch*** eine Rektifikationskolonne (24), in der das Kältemittel aus dem ersten Austreiber (29) aus der reichen Lösung zwischen Drosselelement (22) und ersten Austreiber (29) zweites Kältemittel austreibt.

4. Wärmetransformator (41) nach einem der vorgenannten Ansprüche, ***gekennzeichnet durch*** einen Kältewärmeübertrager (44), in dem das Kältemittel vor Eintritt in den Verflüssiger (43) aus dem flüssigen Kältemittel vor Eintritt in den Verdampfer (45) Wärme aufnimmt.

5. Wärmetransformator (41) nach dem vorgenannten Anspruch, ***gekennzeichnet durch*** einen Flüssigkeitsabscheider, in dem das aus dem Kältemittel nach Austritt aus dem Kältewärmeübertrager (44) kondensierte Lösungsmittel abgetrennt und der reichen Lösung vor Eintritt in den Austreiber (48) zugeführt wird.

6. Wärmetransformator (41) nach dem vorgenannten Anspruch, ***gekennzeichnet durch*** eine Kondensatpumpe (47), die das flüssige Lösungsmittel aus dem Flüssigkeitsabscheider in die reiche Lösung vor Eintritt in den ersten Austreiber (48) pumpt.

7. Wärmetransformator (61, 91) nach einem der vorgenannten Ansprüche, ***gekennzeichnet durch*** einen parallel zu dem Absorber (62, 93) angeordneten zweiten Absorber (63, 92), in dem ein Teilstrom der armen Lösung vor Eintritt in den Absorber (62, 93) einen Teilstrom des Kältemittels vor Eintritt in den Absorber (62, 93) absorbiert und dabei an die arme Lösung vor Eintritt in den Absorber (62, 93) Wärme abgibt.

8. Wärmetransformator (71, 91) nach einem der vorgenannten Ansprüche, ***gekennzeichnet durch*** einen dritten Absorber (72, 94), in dem die reiche Lösung vor dem Drosselelement (75) einen Teilstrom des Kältemittels absorbiert und dabei Wärme an einen Teilstrom der armen Lösung nach Austritt aus dem ersten Austreiber (76, 95) abgibt.

9. Wärmetransformator (1, 21, 41, 61, 71, 91) nach einem der vorgenannten Ansprüche, ***dadurch gekennzeichnet, dass*** das Lösungsmittel Wasser und das Kältemittel Ammoniak ist.

10. Wärmetransformationsprozess mit einem gasförmigen Kältemittel und einem flüssigen Lösungsmittel, einer armen und einer reichen Lösung, wobei die arme und die reiche Lösung einphasige Mischungen des Lösungsmittels und des Kältemittels sind, und wobei die arme Lösung das Kältemittel absorbiert und dabei Wärme abgibt, dann die reiche Lösung erst entspannt wird, anschließend einen ersten dem Wärmetransformationsprozess von außen zugeführten Wärmestrom aufnimmt und dabei das Kältemittel austreibt, dann das Kältemittel von der reichen Lösung abgeschieden, verflüssigt, gepumpt und unter Aufnahme eines zweiten von außen zugeführten Wärmestroms verdampft, und die arme Lösung gepumpt wird, ***dadurch gekennzeichnet, dass*** vor Zufuhr des ersten Wärmestroms ein Teilstrom der reichen Lösung abgezweigt wird und parallel zu dem ersten Wärmestrom aus der reichen Lösung zwischen dem Absorbieren des Kältemittels und dem Entspannen Wärme aufnimmt.

## Claims

1. A heat transformer (1, 21, 41, 61, 71, 91) having a gaseous coolant and a liquid solvent, a depleted solution and a rich solution, wherein the depleted and the rich solutions are single-phase mixtures of the solvent and the coolant, and also having an absorber (2, 26, 62, 93), in which the depleted solution absorbs the coolant and in doing so releases heat, a throttle element (8, 22, 75), which expands the rich solution after it exits the absorber (2, 26, 62, 93), a first expeller (4, 29, 48, 76, 95), in which the rich solution, after exiting the throttle element (8, 22, 75), receives a first heat flow supplied from outside and expels the coolant in a separator (9, 27, 42, 81, 96), a liquefier (5, 25, 43, 97), which liquefies the coolant after it exits the expeller (4, 29, 48, 76, 95), and a coolant pump (6, 77), which pumps the liquid coolant, after it exits the liquefier (5, 25, 43, 97), into a vaporizer (3, 45, 78, 98), in which it receives a second heat flow supplied from outside and vaporizes before entering the absorber (2, 26, 62, 93), and a solvent pump (7), which pumps the depleted solution, after it exits the first expeller (4, 29, 48, 76, 95), into the absorber (2, 26, 62, 93), **characterized by** a second expeller (12, 101), in which a partial flow of the rich solution diverted upstream of the first absorber (4, 29, 48, 76, 95) parallel to the first expeller (4, 29, 48, 76, 95) absorbs heat from the rich solution between the absorber (2, 26, 62, 93) and the throttle element (8, 22, 75).

2. The heat transformer (1, 21, 41, 61, 71, 91) according to the preceding claim, **characterized by** a solution heat exchanger (11, 73, 99), in which the depleted solution, before it enters the absorber (2, 26, 62, 93), receives heat from the rich solution between the absorber (2, 26, 62, 93) and the throttle element (8, 22, 75).

3. The heat transformer (21) according to any one of the preceding claims, **characterized by** a rectification column (24), in which the coolant from the first expeller (29) expels a second coolant from the rich solution between the throttle element (22) and the first expeller (29).

4. The heat transformer (41) according to any one of the preceding claims, **characterized by** a cold heat exchanger (44), in which the coolant, before entering the liquefier (43), receives heat from the liquid coolant before it enters the vaporizer (45).

5. The heat transformer (41) according to the preceding claim, **characterized by** a liquid separator, in which the solvent condensed from the coolant after it exits the cold heat exchanger (44) is separated and supplied to the rich solution before it enters the expeller (48).

6. The heat transformer (41) according to the preceding claim, **characterized by** a condensate pump (47), which pumps the liquid solvent from the liquid separator into the rich solution before it enters the first expeller (48) .

7. The heat transformer (61, 91) according to any one of the preceding claims, **characterized by** a second absorber (63, 92) arranged parallel to the absorber (62, 93), in which a partial flow of the depleted solution, before it enters the absorber (62, 93), absorbs a partial flow of the coolant before it enters the absorber (62, 93) and in doing so releases heat to the depleted solution before it enters the absorber (62, 93).

8. The heat transformer (71, 91) according to any one of the preceding claims, **characterized by** a third absorber (72, 94), in which the rich solution upstream of the throttle element (75) absorbs a partial flow of the coolant and in doing so releases heat to a partial flow of the depleted solution after it exits the first expeller (76, 95).

9. The heat transformer (1, 21, 41, 61, 71, 91) according to any one of the preceding claims, **characterized in that** the solvent is water and the coolant is ammonia.

10. A heat transformation process having a gaseous coolant and a liquid solvent, a depleted solution and a rich solution, wherein the depleted and the rich solutions are single-phase mixtures of the solvent and the coolant, and wherein the depleted solution absorbs the coolant and in doing so gives off heat, wherein the rich solution is first expanded, then receives a first heat flow supplied to the heat transformation process from outside and in doing so expels the coolant, wherein the coolant is then separated from the rich solution, liquefied, pumped, and vaporized by receiving a second heat flow supplied from outside, and the depleted solution is pumped, **characterized in that** prior to the supplying of the first heat flow, a partial flow of the rich solution is diverted and, parallel to the first heat flow, receives heat from the rich solution between the absorption of the coolant and the expansion.

## Revendications

1. Transformateur de chaleur (1, 21, 41, 61, 71, 91) avec du fluide réfrigérant et du solvant liquide, une solution pauvre et une riche, la solution pauvre et la riche étant des mélanges monophasés du solvant et du fluide réfrigérant, de même qu'un absorbeur (2, 26, 62, 93) dans lequel la solution pauvre absorbe le fluide réfrigérant et émet alors de la chaleur, un élément d'étranglement (8, 22, 75) qui détend la solution riche après sa sortie de l'absorbeur (2, 26, 62, 93), un premier extracteur (4, 29, 48, 76, 95) dans lequel la solution riche, après sa sortie de l'élément d'étranglement (8, 22, 75), absorbe un premier flux thermique acheminé depuis l'extérieur et expulse le fluide réfrigérant dans un séparateur (9, 27, 42, 81, 96), un condensateur (5, 25, 43, 97) qui liquéfie le fluide réfrigérant après sa sortie de l'extracteur (4, 29, 48, 76, 95), et une pompe à fluide réfrigérant (6, 77) qui pompe le fluide réfrigérant liquide après sa sortie du condensateur (5, 25, 43, 97) jusque dans un évaporateur (3, 45, 78, 98) en absorbant et en évaporant, avant son entrée dans l'absorbeur (2, 26, 62, 93), un second flux thermique acheminé depuis l'extérieur, et une pompe à solvant (7) qui pompe la solution pauvre après sa sortie du premier extracteur (4, 29, 48, 76, 95) jusque dans l'absorbeur (2, 26, 62, 93), **caractérisé par** un second extracteur (12, 101) dans lequel un flux partiel dérivé en amont du premier extracteur (4, 29, 48, 76, 95) de solution riche absorbe, parallèlement au premier extracteur (4, 29, 48, 76, 95), de la chaleur de la solution riche entre l'absorbeur (2, 26, 62, 93) et l'élément d'étranglement (8, 22, 75).

2. Transformateur de chaleur (1, 21, 41, 61, 71, 91) selon la revendication précédente, **caractérisé par** un transmetteur de chaleur de solution (11, 73, 99) dans lequel la solution pauvre, avant son entrée dans l'absorbeur (2, 26, 62, 93), absorbe de la chaleur de la solution riche entre l'absorbeur (2, 26, 62, 93) et l'élément d'étranglement (8, 22, 75).

3. Transformateur de chaleur (21) selon une des revendications précédentes, **caractérisé par** une colonne de rectification (24) dans laquelle le fluide réfrigérant provenant du premier extracteur (29) expulse du second fluide réfrigérant de la solution riche entre l'élément d'étranglement (22) et le premier extracteur (29).

4. Transformateur de chaleur (41) selon une des revendications précédentes, **caractérisé par** transmetteur de chaleur de réfrigérant (44) dans lequel le fluide réfrigérant, avant son entrée dans le condensateur (43), absorbe de la chaleur du fluide réfrigérant liquide avant son entrée dans l'évaporateur (45).

5. Transformateur de chaleur (41) selon la revendication précédente, **caractérisé par** un séparateur de liquide dans lequel le solvant condensé à partir du fluide réfrigérant, après sa sortie du transmetteur de chaleur de réfrigérant (44), est séparé et acheminé dans la solution riche avant son entrée dans l'extracteur (48).

6. Transformateur de chaleur (41) selon la revendication précédente, **caractérisé par** une pompe à condensat (47) qui pompe le solvant liquide dans le séparateur de liquide jusque dans la solution riche avant son entrée dans le premier extracteur (48).

7. Transformateur de chaleur (61, 91) selon une des revendications précédentes, **caractérisé par** un deuxième absorbeur (63, 92) disposé parallèlement à l'absorbeur (62, 93) dans lequel un flux partiel de solution pauvre absorbe, avant son entrée dans l'absorbeur (62, 93), un flux partiel de fluide réfrigérant avant son entrée dans l'absorbeur (62, 93) et délivre alors de la chaleur à la solution pauvre avant son entrée dans l'absorbeur (62, 93).

8. Transformateur de chaleur (71, 91) selon une des revendications précédentes, **caractérisé par** un troisième absorbeur (72, 94) dans lequel la solution riche absorbe en amont de l'élément d'étranglement (75) un flux partiel de fluide réfrigérant et délivre alors de la chaleur à un flux partiel de solution pauvre après sa sortie du premier extracteur (76, 95).

9. Transformateur de chaleur (1, 21, 41, 61, 71, 91) selon une des revendications précédentes, **caractérisé en ce que** le solvant est de l'eau et le fluide réfrigérant de l'ammoniaque.

10. Processus de transformation de chaleur avec un fluide réfrigérant gazeux et un solvant liquide, une solution pauvre et une riche, la solution pauvre et la riche étant des mélanges monophasés du solvant et du fluide réfrigérant, et la solution pauvre absorbant le fluide réfrigérant et émettant alors de la chaleur, la solution riche étant d'abord détendue puis absorbant un premier flux thermique acheminé depuis l'extérieur vers le processus de transformation de chaleur et expulsant alors le fluide réfrigérant, puis le fluide réfrigérant étant séparé de la solution riche, liquéfié, pompé et évaporé en absorbant un second flux thermique acheminé depuis l'extérieur, et la solution pauvre étant pompée, **caractérisé en ce que**, avant l'acheminement du premier flux thermique, un flux partiel est dérivé de la solution riche et absorbe de la chaleur parallèlement au premier flux thermique de la solution riche entre l'absorption du fluide réfrigérant et la détente.
